# EUROPÄISCHE PATENTSCHRIFT

(11) **EP 0 519 904 B1**
(45) Veröffentlichungstag und Bekanntmachung des Hinweises auf die Patenterteilung: **19.07.1995**
(21) Anmeldenummer: 92890149.5
(22) Anmeldetag: 17.06.1992
(51) Int. Cl.: F16L 27/08

(54) **Anordnung zur Einführung von Druckmedien in Achsen, Wellen od. dgl.**
Assembly for introducing fluids under pressure into axles, shafts and the like
Ensemble pour introduire des fluides sous pression dans les essieux, arbres ou similaire

(30) Priorität: 18.06.1991 AT 1224/91
(43) Veröffentlichungstag der Anmeldung: 23.12.1992
(73) Patentinhaber: VOEST-ALPINE INDUSTRIEANLAGENBAU GMBH, 4020 Linz (AT)
(72) Erfinder: Scheurecker, Werner, A-4030 Linz (AT); Hauer, Harald, A-1200 Wien (AT); Angyal, Jozsef, Dipl.-Ing., A-3400 Klosterneuburg (AT); Derflinger, Friedrich, A-4063 Hörsching (AT)
(74) Vertreter: Rippel, Andreas, Dipl.-Ing.

(56) Entgegenhaltungen:
- AU-B- 6 899 181
- US-A- 2 793 058
- US-A- 3 129 960
- US-A- 4 313 624

## Beschreibung

Die Erfindung bezieht sich auf eine Anordnung zur Einführung von Druckmedien in Achsen, Wellen od.dgl., mit einer Zuführleitung für das Druckmedium, einem mit der Zuführleitung verbundenen statischen Dichtteil und einem damit zusammenwirkenden, mit der Achse, Welle od.dgl. verbundenen rotierenden Dichtteil.

Bei vielen Einsätzen von rotierenden Teilen, welche zwecks Kühlung oder Beheizung mit einem gasförmigen oder flüssigen Medium beschickt werden, werden Anordnungen der oben genannten Art verwendet. Solche Anordnungen werden auch vielfach als "drehbare Einführungen" bezeichnet.

Um bei einem unrunden Lauf der Welle oder der Achse die daraus resultierenden Bewegungen aufnehmen zu können, ist bei den bekannten Anordnungen der statische Dichtteil mit einer flexiblen Zuleitung verbunden, eine starre Verrohrung war nicht zulässig. Besonders bei einem rauhen Betrieb sind jedoch die flexiblen Zuleitungsschläuche eine ständige Quelle von Betriebsstörungen.

Im Dokument US-A-3 129 960 ist eine Anordnung zur Zuführung einer unter Druck stehenden Flüssigkeit von einem mit der Zuführleitung verbundenen Lagerdeckel in das äußere Ende einer Welle beschrieben. Dabei sind zwischen dem Lagerdeckel und der Welle zwei mit dem Lagerdeckel verbundene hülsenförmige Teile angeordnet, die miteinander über einen O-Ring verbunden sind. Der der Welle zugeordnete Teil ist in eine Bohrung der Welle eingesetzt, wobei zwischen dieser Bohrung und dem Teil an dessen Umfang ein Spalt freigelassen ist. Dadurch soll eine beschränkte Bewegung bzw. Verschwenkung der Welle gegenüber dem Lagerdeckel möglich sein, welche Bewegung jedoch sehr klein sein müßte, weil das Lager als Rillenkugellager ausgebildet ist, das nur ganz geringe Bewegungen zuläßt. Überdies sind bei dieser Anordnung Leckverluste durch den Spalt unvermeidlich.

In der US-A-2 793 058 ist eine drehende Verbindung zwischen einer starren Zuführleitung und einem drehenden Behälter beschrieben, bei der ebenfalls ein Rillenkugellager verwendet wird. Die Abdichtung zwischen der Zuführleitung und dem Verbindungsrohr zum Behälter erfolgt über eine federbelastete Berührungsdichtung. Diese bekannte Anordnung ist nur für geringe Belastungen brauchbar.

Die Erfindung hat es sich daher zum Ziel gesetzt, eine Anordnung zur Einführung von Druckmedien in Achsen, Wellen od.dgl. zu schaffen, bei der die Verwendung von flexiblen Schläuchen nicht erforderlich ist und keine Leckverluste durch berührungsfreie Dichtungen auftreten können. Erreicht wird dies dadurch, daß das Lager der Achse, Welle od. dgl. schwenkfähig ausgebildet ist und daß die mit dem statischen Dichtteil zusammenwirkende Dichtfläche am rotierenden Dichtteil wenigstens annähernd entweder um den Schwenkmittelpunkt des Lagers der Achse, Welle od.dgl. schwenkbar oder in der Mittelebene des Lagers angeordnet ist, wobei die Zuführleitung als starre Leitung ausgebildet ist.

Bei einer erfindungsgemäßen Anordnung kann daher der mit der Achse, Welle, od.dgl. verbundene rotierende Dichtteil schwenken, ohne daß der statische Dichtteil beeinträchtigt wird. Ist die Dichtfläche um den Schwenkmittelpunkt schwenkbar, erfolgt zwar eine Relativbewegung zwischen rotierendem und statischem Dichtteil, jedoch kann hiedurch keine Beschädigung erfolgen. Ist die Dichtfläche nahe da Schwenkmittelpunkt bzw. der Mittelebene des Lagers angeordnet, ist die entstehende Relativbewegung unerheblich.

Bei einer zweckmäßigen Ausführungsform der Erfindung ist der statische Dichtteil austauschbar in einem mit der Zuführleitung verbundenen Deckel und der rotierende Dichtteil ebenfalls austauschbar angeordnet. Dadurch ist eine leichte Montage und eben die Austauschbarkeit gewährleistet.

Um ein dauerndes Aneinanderliegen der beiden Dichtteile zu gewährleisten, ist es vorteilhaft, wenn der statische Dichtteil in einer eine Feder aufnehmenden Bohrung des Deckels verschiebbar gelagert ist, wobei die Feder auf den statischen Dichtteil in Richtung zum rotierenden Dichtteil hin wirkt.

Bei einer Ausführungsform der Erfindung sind die beiden Dichtteile mit kalottenförmigen Dichtflächen versehen, deren Mittelpunkt wenigstens annähernd im Schwenkmittelpunkt des Lagers liegt. Der mit der Welle, Achse od.dgl. starr verbundene rotierende Dichtteil schwenkt daher mit der Achse, Welle, od.dgl. mit und die beiden kalottenförmigen Dichtflächen gleiten dabei aneinander, ohne daß die Dichtwirkung gestört wird.

Bei einer weiteren Ausführungsform der Erfindung ist der rotierende Dichtteil in einer Kalotte gelagert, deren Mittelpunkt wenigstens annähernd im Schwenkmittelpunkt des Lagers liegt, und die beiden Dichtteile sind mit ebenflächigen Dichtflächen versehen, wobei der statische Dichtteil in der Bohrung des Deckels schwenkbar gehalten ist. Bei dieser Ausführungsform kann daher der schwenkbar mit der Achse, der Welle, od.dgl. verbundene rotierende Dichtteil selbst schwenken, sodaß die Dichtflächen eben ausgebildet werden können.

Bei einer dritten Ausführungsform der Erfindung sind die beiden Dichtteile als konzentrisch zueinander angeordnete Hülsen ausgebildet und es ist wenigstens annähernd in der Mittelebene des Lagers zwischen den beiden Hülsen eine Dichtung vorgesehen. Bei dieser Variante der Erfindung liegen die Dichtflächen daher in der Mittelebene des Lagers, sodaß es auch hier zu keiner wesentlichen Relativbewegung kommen kann.

Z.B. bei der Abstützung eines noch einen flüssigen Kern aufweisenden Stahlstranges kommen die Lagerungen der Stützrollen so eng zusammen, daß außen liegende Zuleitungen einander behindern können. In einem solchen Fall kann in weiterer Ausbildung der Erfindung die starre Zuführleitung in dem das Lager aufnehmenden Lagergehäuse ausgebildet sein.

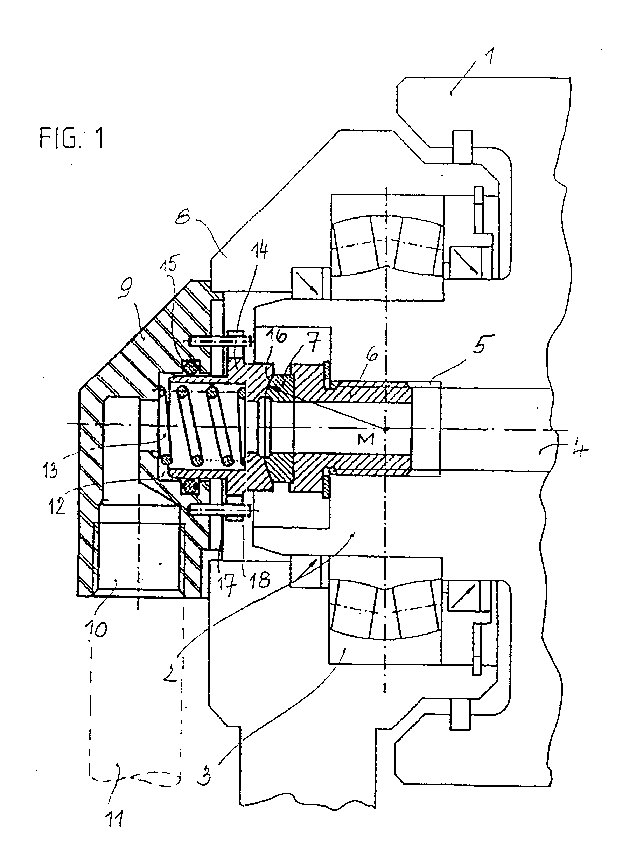

Nachstehend ist die Erfindung an Hand der Zeichnungen näher erläutert, in denen Ausführungsbeispiele der Erfindung dargestellt sind, ohne daß die Erfindung jedoch auf diese Ausführungsbeispiele beschränkt wäre. Die Fig. 1 bis 4 zeigen dabei jeweils im Querschnitt vier verschiedene erfindungsgemäße Anordnungen. Die Achsen und deren Lagerung sind dabei in den Fig. 1 bis 3 nur schematisch dargestellt.

Gemäß Fig.1 ist die Achse 2 einer Rolle 1 in einem Pendelrollenlager 3 gelagert. Die Rolle 1 soll gekühlt werden und ist zu diesem Zweck mit einer Axialbohrung 4 versehen, durch die Kühlflüssigkeit fließen soll.

In ein Gewinde 5 der Bohrung 4 ist ein rotierender Dichtteil 6 eingeschraubt, der an seiner dem Gewinde abgewendeten Seite mit einem Gleitring 7 versehen ist. Dieser kann auf den Dichtteil 6 z.B. aufgeklebt sein.

Auf das Gehäuse 8 des Lagers 3 ist ein Deckel 9 aufgesetzt, der einen Anschluß 10 für eine starre Zuführleitung 11 besitzt. Der Deckel 9 ist mit einer Bohrung 12 versehen, die eine Feder 13 bzw. das hülsenförmige Ende eines statischen Dichtteiles 14 aufnimmt. Ein O-Ring 15 ist zwischen dem Dichtteil 14 und dem Deckel 9 eingesetzt.

Sowohl der Dichtteil 6 (bzw. dessen Gleitring 7) als auch der Dichtteil 14 besitzen Dichtflächen 16, die die Form einer Kalotte aufweisen, die ihren Mittelpunkt im Schwenkmittellpunkt M des Lagers 3 hat. Der statische Dichtteil 14 ist überdies im Deckel 9 über Stifte 17, die in Einschnitte 18 eingrefen, so gehalten, daß er gegenüber dem Deckel 9 leichte Schwenkbewegungen ausführen kann.

Führt daher im Betrieb die Rolle 1 und damit deren Achse 2 eine Schwenkbewegung aus, schwenkt die kalottenförmige Dichtfläche 16 des Dichtteiles 6 um den gleichen Schwenkmittelpunkt M und gleitet daher an der gleichfalls kalottenförmigen Dichtfläche des statischen Dichtteiles 14. Der Deckel 9 und damit die Zuführleitung 11 wird dadurch in keiner Weise beeinflußt, sodaß die Zuführleitung 11 als starre Leitung ausgeführt sein kann.

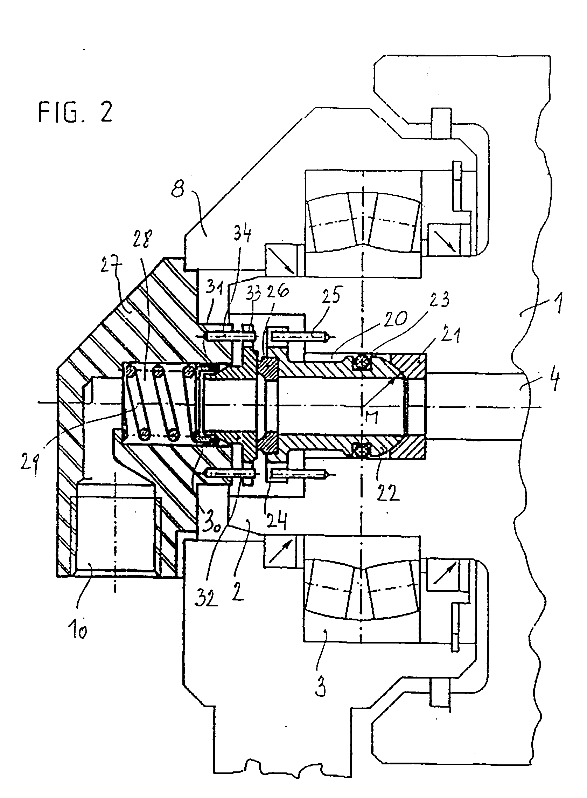

Beim Ausführungsbeispiel nach Fig.2 ist in die Erweiterung 20 der Bohrung 4 eine Stützkalotte 21 für den rotierenden Dichtteil 22 eingesetzt, der eine mit der Stützkalotte 21 zusammenwirkende kalottenförmige Endfläche besitzt. Beide Kalotten haben ihren Mittelpunkt im Schwenkmittelpunkt M des Lagers 3. Der Dichtteil 22 ist mittels eines O-Ringes 23 in der Erweiterung 20 abgedichtet und mittels in Schlitze 24 eingreifende Stiften 25 schwenkbar in der Achse 2 gehalten. Mit dem Dichtteil 22 ist ein Gleitring 26 mit ebenen Dichtflächen verbunden, z.B. verklebt.

Auf das Lagergehäuse 8 des Lagers 3 ist ein Deckel 27 aufgesetzt, der wieder einen Anschluß für eine Zuführleitung aufweist. In eine Bohrung 28 des Deckels 27 ist eine Feder 29 eingesetzt, die über einen Stützring 30 und einen O-Ring 31 auf einen statischen Dichtteil 32 wirkt. Auch dieser Dichtteil ist mittels in Schlitze 33 eingreifende Stiften 34 schwenkbar im Deckel 27 gehalten.

Führt bei dieser Ausführungsform die Achse 2 eine Schwenkbewegung aus, kann der rotierende Dichtteil 22 zufolge seiner kalottenförmigen Lagerung um den Mittelpunkt M schwenken, wobei die ebenen Dichtflächen der Dichtteile 22 und 32 nicht beeinträchtigt werden.

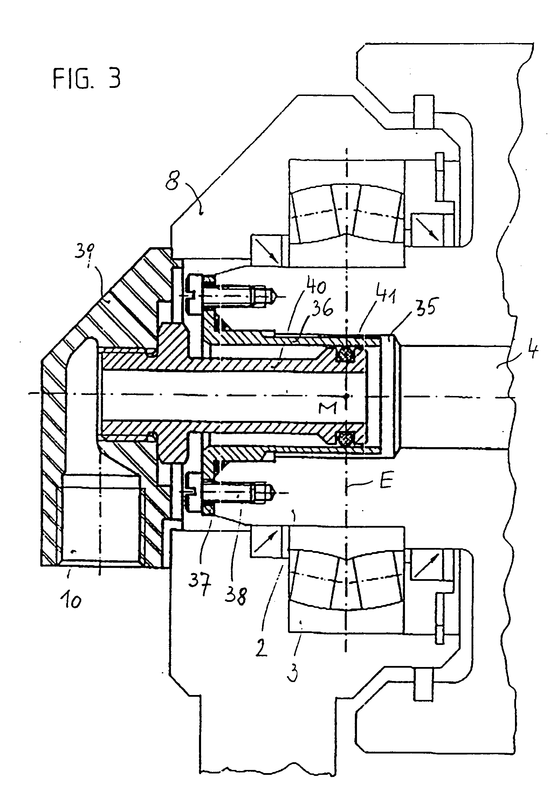

Bei der Ausführungsform nach Fig.3 ist in eine Erweiterung 35 der Axialbohrung 4 ein hülsenförmiger Dichtteil 36 eingesetzt und mittels seines flanschförmigen Endes 37 und Schrauben 38 an der Achse 2 befestigt.

In einen auf das Lagehäuse 8 aufgesetzten Deckel 39, der wieder mit einem Anschluß 10 für eine Zuführleitung versehen ist, ist ein statischer Dichtteil 40 eingeschraubt, der ebenfalls hülsenförmig ausgebildet ist und koaxial zum Dichtteil 36 liegt. Zwischen den beiden hülsenförmigen Dichtteilen 36 und 40 ist ein O-Ring 41 eingesetzt und zwar derart, daß er in der Mittelebene E des Lagers 3 liegt. Die Dichtflächen, das sind die Flächen zwischen dem O-Ring 41 einerseits und den Dichtteilen 36 bzw. 40 anderseits, liegen demnach auch bei diesem Ausführungsbeispiel so, daß bei einer Schwenkung der Achse 2 deren Beeinträchtigung nicht eintritt.

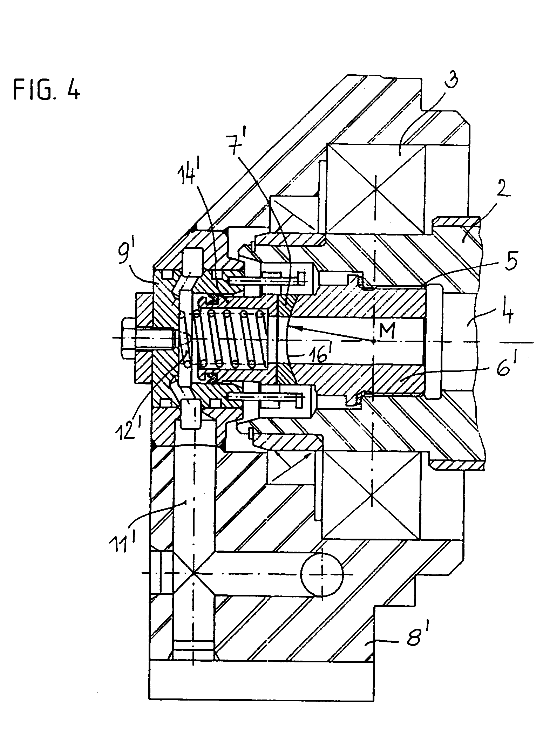

Die Ausführungsform nach Fig. 4 entspricht weitgehend der Ausführungsform nach Fig. 1, es sind daher für ähnliche Teile gleiche Bezugszeichen mit einem hochgestellten Komma verwendet. Unterschiedlich ist vorallem, daß die starre Zuführleitung 11' innerhalb des Lagergehäuses 8' verläuft, d.h. durch Bohrungen verwirklicht ist. Die gezeigte Konstruktion ermöglicht auch ein Auswechseln des Dichtungssatzes ohne Demontage des Lagergehäuses.

Der Erfindungsgegenstand kann auf alle Konstruktionen angewendet werden, bei denen ein rotierender Teil mit einem gasförmigen oder flüssigen Medium versorgt werden soll.

## Patentansprüche

1. Anordnung zur Einführung von Druckmedien in Achsen (2), Wellen od. dgl., mit einer Zuführleitung (11) für das Druckmedium, einem mit der Zuführleitung (11) verbundenen statischen Dichtteil (12,32,40) und einem damit zusammen-wirkenden, mit der Achse (2), Welle od. dgl. verbundenen rotierenden Dichtteil (6,7;22,26;36), **dadurch gekennzeichnet**, daß das Lager (3) der Achse (2), Welle od. dgl. schwenkfähig ausgebildet ist und daß die mit dem statischen Dichtteil (14,32,40) zusammenwirkende Dichtfläche (16) am rotierenden Dichtteil (6,7;22,26;36) wenigstens annähernd entweder um den Schwenkmittelpunkt (M) des Lagers (3) der Achse (2), Welle od. dgl. schwenkbar oder in der Mittelebene (E) des Lagers (3) angeordnet ist, wobei die Zuführleitung (11) als starre Leitung ausgebildet ist.

2. Anordnung nach Anspruch 1, **dadurch gekennzeichnet**, daß der statische Dichtteil (14,32,40) austauschbar in einem mit der Zuführleitung (11) verbundenen Deckel (9,27,39) und der rotierende Dichtteil (6,7;22,26;36) ebenfalls austauschbar angeordnet ist.

3. Anordnung nach Anspruch 1 oder 2, **dadurch gekennzeichnet**, daß der statische Dichtteil (14,32) in einer eine Feder (13,29) aufnehmenden Bohrung (12,28) des Deckels (9,27) verschiebbar gelagert ist, wobei die Feder (13,29) auf den statischen Dichtteil (14,32) in Richtung zum rotierenden Dichtteil (6,7;22,26) hin wirkt.

4. Anordnung nach Anspruch 3, **dadurch gekennzeichnet**, daß die beiden Dichtteile (6,7;14) mit kalottenförmigen Dichtflächen (16) versehen sind, deren Mittelpunkt (M) wenigstens annähernd im Schwenkmittelpunkt (M) des Lagers (2) liegt.

5. Anordnung nach Anspruch 3, **dadurch gekennzeichnet**, daß der rotierende Dichtteil (22,26) in einer Kalotte gelagert ist, deren Mittelpunkt (M) wenigstens annähernd im Schwenkmittelpunkt (M) des Lagers (3) liegt, und daß die beiden Dichtteile (22,26;32) mit ebenflächigen Dichtflächen versehen sind sowie der statische Dichtteil (32) in der Bohrung (28) des Deckels (27) schwenkbar gehalten ist.

6. Anordnung nach Anspruch 1 oder 2, **dadurch gekennzeichnet**, daß der statische (40) und der rotierende (36) Dichtteil als konzentrisch zueinander angeordnete Hülsen ausgebildet sind und wenigstens annähernd in der Mittelebene (E) des Lagers (3) zwischen den beiden Hülsen eine Dichtung (41) vorgesehen ist.

7. Anordnung nach einem der Ansprüche 1 bis 6, **dadurch gekennzeichnet**, daß die starre Zuführleitung (11') in dem das Lager (3) aufnehmenden Lagergehäuse (8') ausgebildet ist.

## Claims

1. Arrangement for introducing pressure media into axles (2), shafts or the like, with a feed pipe (11) for the pressure medium, with a static seal portion (12, 32, 40) connected to the feed pipe (11), and, cooperating therewith, a rotating seal portion (6, 7; 22, 26; 36) connected to the axle (2), shaft or the like, **characterised in that** the bearing (3) of the axle (2), shaft or the like is designed to be pivotable, and in that the seal surface (16) on the rotating seal portion (6, 7; 22, 26; 36), co-operating with the static seal portion (14, 32, 40), is at least approximately either arranged to be pivotal about the centre of pivoting (M) of the bearing (3) of the axle (2), shaft or the like, or is disposed in the central plane (E) of the bearing (3), the feed pipe (11) being in the form of a rigid pipe.

2. Arrangement according to claim 1, **characterised in that** the static seal portion (14, 32, 40) is disposed to be replaceable in a cover (9, 27, 39) connected to the feed pipe (11), and the rotating seal portion (6, 7; 22, 26; 36) is likewise replaceable.

3. Arrangement according to claim 1 or 2, **characterised in that** the static seal portion (14, 32) is displaceably mounted in a bore (12, 28) of the cover (9, 27) accommodating a spring (13, 29) , said spring (13, 29) acting upon the static seal portion (14, 32) in the direction of the rotating seal portion (6, 7; 22, 26).

4. Arrangement according to claim 3, **characterised in that** the two seal portions (6, 7; 14) are provided with dome-shaped seal surfaces (16) whose centre-point (M) lies at least approximately in the centre of pivoting (M) of the bearing (2).

5. Arrangement according to claim 3, **characterised in that** the rotating seal portion (22, 26) is mounted in a dome whose centre-point (M) lies at least approximately in the centre of pivoting (M) of the bearing (3), and in that the two seal portions (22, 26; 32) are provided with planiform seal surfaces, and the static seal portion (32) is secured to pivot in the bore (28) of the cover (27).

6. Arrangement according to claim 1 or 2, **characterised in that** the static (40) and the rotating (36) seal portions are in the form of sleeves disposed concentrically to one another, and a seal (41) is provided at least approximately in the central plane (E) of the bearing (3) between the two sleeves.

7. Arrangement according to one of claims 1 to 6, **characterised in that** the rigid feed pipe (11') is formed in the bearing housing (8') accommodating the bearing (3).

## Revendications

1. Disposition relative à l'introduction d'imprimés dans des axes (2), des arbres ou des dispositifs semblables avec un conduit d'approvisionnement (11) pour l'imprimé, avec une garniture d'étanchéité statique (12, 32, 40) liée au conduit d'approvisionnement (11) et une garniture d'étanchéité rotative (6, 7; 22, 26; 36) liée à l'axe (2) à l'arbre ou à un dispositif semblable, **caractérisée en ce que** le palier (3) de l'axe (2), de l'arbre ou d'un dispositif semblable est pivotable et que la surface d'étanchéité (16) liée à la garniture d'étanchéité statique (14, 32, 40) au niveau de la garniture d'étanchéité rotative peut pivoter approximativement autour du centre du pivotage (M) du palier (3) de l'axe (2), de l'arbre ou d'un dispositif semblable ou et placée au milieu (E) du palier (3), le conduit d'approvisionnement (11) étant un conduit rigide.

2. Disposition selon revendication 1, **caractérisée en ce que** la garniture d'étanchéité statique (14, 32, 40) qui est échangeable, est placée dans un couvercle (9, 27, 39) lié au conduit d'approvisionnement (11) et que la garniture d'étanchéité rotative (6, 7; 22, 26; 36) est également échangeable.

3. Disposition selon revendication 1 ou 2, **caractérisée en ce que** la garniture d'étanchéité statique (14, 32) est placée de manière réglable dans un orifice (12, 28) du couvercle (9, 27) recevant un ressort, le ressort (13, 29) agissant sur la garniture d'étanchéité statique (14, 32) en direction de la garniture d'étanchéité rotative (6, 7; 22, 26).

4. Disposition selon revendication 3, **caractérisée en ce que** les deux garnitures d'étanchéité (6, 7; 14) sont munies de surfaces d'étanchéité (16) en forme de calotte dont le centre (M) se trouve approximativement dans le centre de pivotage (M) du palier.

5. Disposition selon revendication 3, **caractérisée en ce que** la garniture d'étanchéité rotative (22, 26) est placée dans une calotte dont le centre (M) se trouve approximativement dans le centre de pivotage (M) du palier (3) et que les deux garnitures d'étanchéité (22, 26; 32) sont aménagées de surfaces d'étanchéité planes et que la garniture d'étanchéité statique (32) est manitenue dans l'orifice (28) du couvercle (27).

6. Disposition selon revendication 1 ou 2, **caractérisée en ce que** les garnitures d'étanchéité statique (40) et rotative (36) sont aménagées comme des gaines concentriques l'un par rapport à l'autre et qu'une garniture (41) soit prévue approximativement sur la surface de centre (E) du palier (3) entre les deux gaines.

7. Disposition selon revendications 1 à 6, **caractérisée en ce que** le conduit d'approvisionnement rigide (11') est aménagé dans un corps (8') recevant le palier (3).
